# EUROPEAN PATENT SPECIFICATION

(11) **EP 1 076 880 B1**
(45) Date of publication and mention of the grant of the patent: **20.07.2005**
(21) Application number: 99920217.9
(22) Date of filing: 30.04.1999
(51) Int. Cl.: G06K 15/00, B41J 2/45, B41J 2/46

(54) **METHOD AND APPARATUS FOR RECORDING DIGITAL IMAGES ON PHOTOSENSITIVE MATERIAL**
VERFAHREN UND GERÄT ZUM AUFNEHMEN VON DIGITALEN BILDERN AUF FOTOSENSITIVEM MATERIAL
PROCEDE D'ENREGISTREMENT D'IMAGES NUMERIQUES SUR UN MATERIAU PHOTOSENSIBLE ET APPAREIL CORRESPONDANT

(30) Priority: 01.05.1998 US 83975 P; 01.05.1998 US 83902 P
(43) Date of publication of application: 21.02.2001
(73) Proprietor: ZBE, Incorporated, Santa Barbara, CA 93117 (US)
(72) Inventor: BOGART, Zac, Santa Barbara, CA 93105 (US); HART, Brian, Santa Barbara, CA 93110 (US); BROWNING, James, H., Lebanon, NH 03766 (US)
(74) Representative: Hackney, Nigel John
(86) International application number: PCT/US1999/009495
(87) International publication number: WO 1999/057679

(56) References cited:
- WO-A-92/00196
- US-A- 3 988 742
- US-A- 4 278 671
- US-A- 4 780 731
- US-A- 5 517 151
- US-A- 5 729 276

## Description

### FIELD OF THE INVENTION

This invention relates generally to a method and apparatus for producing high quality continuous tone and/or color images on photosensitive material (i.e., photographic paper or film) from information provided in digital form. More particularly, this invention relates to a method and apparatus for configuring and controlling a plurality of light sources to enable them to produce high quality images on photosensitive material.

### DESCRIPTION OF PRIOR ART

In the field of photographic digital printers and image setters, the use of multiple light sources to create individual pixels is well known. US Pat. No. 3,988,742 describes using LEDs and fiber optic light guides to deliver the light to the photosensitive material. Applications of this technology have included type setting, and the generation of lithographic films for printing. In these applications, the light output of LEDs is coupled into the input end of the fiber optic tubes. The output ends of the fiber optic tubes are arranged in a linear array. As photosensitive material is passed by the linear array of fiber optic tubes, the LED's are illuminated in such sequence as to cause the formation of indicia or images on the photosensitive material. This process is described in US Patents 3,832,488 and 4,000,495 and 5,093,682. The use of fiber optic tubes of both square and round cross sections is known.

In such applications as described above, the precision assembly of the output ends of the fiber optics is important. Poor alignment, or uneven spacing of the output ends of the fibers cause distortions in the images being generated. US Pat. Nos. 4,364,064 and 4,389,655 describe devices for precisely positioning the fiber optic tubes. US Pat. No. 4,590,492 describes a method for masking the ends of the fiber optic tubes to provide more precise alignment of the light sources exposing the photosensitive material.

Prior art systems have typically been used to form lithographic images and indicia for typesetting and printing consisting solely of white and black areas without intermediate tones. Due to the lack of intermediate tonal detail, such systems are tolerant of some imprecision in the quality and quantity of light delivered to the photosensitive material. More particularly, they are typically tolerant of imperfect pixel to pixel alignment because of slight pixel blooming which occurs as a consequence of using exposure levels high enough to saturate the photosensitive material.

Continuous tone images, e.g., images which are predominately composed of middle tones, whether colors or gray tones, require significant precision in pixel formation and alignment. Misalignment of one pixel relative to its neighbors will cause unwanted lines or other artifacts to appear in a continuous tone image.

In typical typesetting and lithographic applications, it is generally unnecessary to provide for continuous tonal values. Rather, each light source is generally driven to saturate the photosensitive material. Exposure in excess of what is needed for saturation has essentially no effect. Accordingly, in such printing systems, it is only necessary to drive the light sources to such an extent that the dimmest light source saturates the photosensitive material. Thus, there is generally no need to precisely match the outputs of the multiple light sources.

In contrast, the formation of high quality continuous tone images by multiple light sources requires that the sources be precisely matched. Failure to match the light sources, at all useable light levels, will typically produce unwanted lines or artifacts in the printed image. US Pat. No. 3,988,742 generally recognizes the need for normalization of light sources to minimize mismatches.

WO92/00196 discloses a non-impact printer apparatus in which the output of LEDs is adjusted so as to compensate for the temperature of the print head and the age of the LEDs.

Photosensitive materials exhibit two well known and undesirable properties called (1) latent image degradation and (2) reciprocity failure. Latent image degradation causes the image exposed onto photosensitive material to change between the time the material is exposed and the time it is processed. Reciprocity failure causes photosensitive materials to respond differently to identical amounts of illumination depending on the duration and intensity of the illumination. For example, a first exposure of X intensity for Y seconds may produce a different result than a second exposure of X/2 intensity for 2Y seconds. These two properties can produce unwanted artifacts to appear in the printed image.

### SUMMARY OF THE INVENTION

The present invention is directed to a method and apparatus for exposing photosensitive material to form high quality continuous tone and/or color images thereon, according to independent claims 1 and 9.

Embodiments of the invention are typically comprised of an imaging (or print) head comprised of multiple pixel image generators, e.g., light sources. The head is preferably mounted for linear movement in a first, i.e., scanning direction, across the width of a web of photosensitive material. The photosensitive material is mounted for linear movement in a second direction perpendicular to said first direction to enable successive scan strips (i.e., groups of scan lines) to be imaged onto an "image field" of said photosensitive material. The image field can be considered to consist of a rectangular matrix of "rows" extending in the scan direction across the web width and "columns" extending perpendicular to the rows, i.e., longitudinally along the web. The head can be stepped or moved continuously in the scan direction with the multiple light sources being selectively enabled to expose an image onto the photosensitive material.

A system in accordance with the invention produces a field of "interpolated pixels", each interpolated pixel being formed by the overlap between adjacent pixel images. More particularly, an interpolated pixel in accordance with the invention can be formed by the overlap between adjacent pixel images displaced in the scan direction, e.g., horizontal, and/or by the overlap between adjacent pixel images displaced in the longitudinal direction, e.g., vertical.
It is an object of this invention to provide a method and apparatus for precisely delivering light to photosensitive material to allow the printing of extremely high quality images from digital information.

It is a further object of this invention to provide a method and apparatus for blending the pixels of an image presented in digital form, so as to increase the apparent resolution and sharpness of the resulting printed image.
It is a further object of this invention to provide a low cost imaging head capable of precisely delivering light to photosensitive material with the precision required to allow the printing of extremely high quality images.

In accordance with a preferred embodiment, the imaging head is comprised of square or rectangular pixel image generators, e.g., fiber optic tubes, mounted to form a rectangular array. The pixel image generators are inclined at an angle of 45 degrees to the scan direction. As the print head scans, each fiber optic tube can expose a pixel image onto the photosensitive material. The exposure levels of the pixel images are preferably specified in a digital file representing an image to be printed. As a result of being inclined at 45 degrees, the pixel images exposed onto the photosensitive material are diamond shaped. Each pixel image overlaps its neighbor by substantially 50% of the center to center distance between pixel images. The pattern resulting from the overlapping of the pixels images generates geometrically interpolated pixel areas with each such area being about 25% of the original pixel image area. Further, the shape of each pixel relative to the scan direction causes the exposure in the area between adjacent scan lines to remain consistent and to cause superior blending of each pixel image with its neighboring pixel images.

The generation of high quality continuous tone images requires the precise blending of the pixels imaged on the photosensitive material. Precise blending of the pixels requires that the pixels themselves be of uniform color and intensity. Fiber optic tubes operate by the principle of "total internal reflection" of the light waves introduced into the fiber optic tube. The symmetric nature of round fiber optic tubes is such that the image of the light source at the input end of the tube is delivered, more or less intact, to the output end of the tube. The nature of LEDs and other light sources is that the light emitting element does not emit perfectly uniform illumination. Consequently, the image of the LED die will propagate down a round fiber optic tube and be delivered to the end. The non-uniform nature of the image of the light element will cause the pixels to blend poorly with one another. In a fiber optic tube of square or rectangular cross section, the image is scrambled by the successive reflections off the orthogonal walls of the tube. The principles of "total internal reflection" causes most all of the light energy which enters the fiber optic tube to be delivered to the output, but with the image scrambled to such an extent as to make the light output from the fiber optic tube substantially uniform.

As described above, the generation of high quality continuous tone images requires extreme precision in the placement and uniformity of illumination of the pixels comprising the image. Imprecision in either of these will result in artifacts or lines appearing in the printed image. In the printing method as described herein, a plurality of independently excitable light sources is employed to provide the illumination for a matching number of pixels. When printing onto color photosensitive materials, extreme precision is required in the matching of the spectral output characteristics of the multiple light sources. If the light sources are not of precisely the same spectral characteristics, artifacts or lines will appear in the printed image. Light sources of different spectral characteristics will expose different layers of the photosensitive material with differing efficacy. It is possible to adjust the intensity of light sources to be equally effective in exposure at a particular color or shade. However, if the spectral characteristics of the light sources are not precisely matched to one another, they will not be equally effective at exposing a different color. The result will be that artifacts or lines appear in some colors of the printed image, but not others.

In a preferred embodiment of the invention, the individual light sources are matched in spectral output with the use of a narrow pass band filter for each color. The narrow pass nature of the filter restrains the exposing energy of each LED to a narrow wavelength range within which the photosensitive material will have uniform color response. The filter is fabricated in such a way as to cover all of the pixels of a given color with the same filter. In one implemented embodiment of the invention, filters of two independent wavelengths were fabricated on the same substrate and placed over the ends of the fibers.

The print head can be imaged onto the photosensitive material either by intimate contact or via a lens system. In one implemented embodiment of the invention, the print head is comprised of three columns of fiber optic tube ends, each column containing 32 tube ends. The head scans across a 30 inch width of photosensitive material and exposes a strip of approximately 100 inches during each scan. After each scan, the material is advanced in the longitudinal direction by the height of the exposed strip area. The head then successively scans across the photosensitive material exposing additional strip areas to fully cover the image field. In an alternative embodiment of the invention, the head could be the full width of the material obviating the need for the head to scan across the width of the material.

In accordance with a significant feature of the present invention, the outputs of multiple light sources are normalized prior to exposing the photosensitive material. In accordance with a preferred embodiment, each of the multiple light sources is driven by a different signal weighted to cause all of the light sources to output light of intensity appropriate to produce a uniform image density over a wide range of image densities. For example, each light source is driven by a different digital-to-analog converter (DAC). A control processor supplies a multibit intensity correction value to each DAC enabling each DAC to supply a drive signal to its associated light source weighted to cause all of the light sources to output light of substantially uniform intensity at a certain intensity level.

In accordance with the preferred embodiment, each light source is further driven by a different timer circuit. Exposing efficiency data for each light source is stored in an exposure normalization lookup table which is accessed by the processor to supply a multi-bit exposure time correction value to each timer circuit to control the on-duration of its associated light source. This allows each light source to produce a normalized exposing efficacy over a wide range of print density levels.

In accordance with another aspect of the invention, the apparatus is used to produce a test image pattern which is then scanned to determine the relative exposing efficacy of each light source. This exposing efficacy data is used to build the aforementioned normalization look up tables. In the preferred embodiment, the exposing efficacy of each of the multiple light sources is measured by first exposing a predetermined test image pattern onto photosensitive material. The photosensitive material is then processed to reveal the image. The image is then scanned into a computer for subsequent analysis. The test image is configured to enable the computer to determine which of the multiple light sources exposed each particular area of the test image. Upon analysis of the test image, the computer assesses the relative exposing efficacy of each of the multiple light sources. This is done by measuring the image density in multiple areas corresponding to each of the light sources. Based on the density variations within the image, the intensity correction values to be applied to the DACs, and the exposure time values to be applied to the timer circuits are calculated. The test image is then reprinted and the analysis process repeated until a visually satisfactory hard copy test image is produced.

The properties of latent image degradation and reciprocity failure can produce visible artifacts in the image proximate to the edges of a scan strip. That is, light sources close to the edge of a scan strip typically become more effective at higher densities than the light sources in the middle of the scan. By individually normalizing the light sources in accordance with the invention over the range of image densities within the printing spectrum, this variation can be effectively eliminated.

### BRIEF DESCRIPTION OF THE DRAWINGS

Figure 1 is a schematic isometric illustration of an exposing head comprising a rectangular array of square fiber optic tube ends useful in a preferred embodiment of the invention;
Figure 2 is a schematic isometric illustration of a portion of a digital printer in accordance with the invention showing a drum for transporting a photosensitive material web and a print head mounted for linear movement to scan across the width of the web;
Figure 3A is a schematic illustration of multiple LED light sources useful in the print head of Figure 1 driven by a control processor, via digital-to-analog converters (DACs);
Figure 3B is a schematic illustration similar to Figure 3A showing the incorporation of timers for controlling the exposure duration of each LED;
Figure 3C is a schematic representation of the control circuit for each LED of Figure 3B;
Figure 3D depicts image density vs. exposure time performance curves for a typical population of uncorrected LEDs and normalized curves Pc and Pe;
Figure 3E is a schematic representation of an alternative which is not an embodiment of LED control circuit according to the invention;
Figure 4 is an illustration of a preferred test image pattern which can be printed by the apparatus of Figure 2 for use in analyzing the exposing efficacy of each of the multiple light sources in the print head;
Figure 5 is a block diagram schematically depicting the use of a scanner to analyze the test image of Figure 4 to produce the intensity correction values and exposure time values for respectively controlling the DAC's and timer circuits of Figure 3B;
Figure 6 is a flow chart describing a preferred analysis and normalization program executed by the control processor in accordance with the invention; and
Figure 7 depicts the appearance of unwanted visible lines on a printed image attributable to latent image degradatoin and reciprocity failure effects.
Figure 8 is a schematic illustration depicting a prior art scheme for enabling a print head comprised of a column of square light sources to scan across a web of photosensitive material to expose pixel images thereon;
Figure 9A is a schematic illustration depicting a preferred system in accordance with the invention for exposing pixel images onto the photosensitive material; and Figure 9B schematically depicts an alternative head configuration;
Figures 10 and 11 are schematic illustrations showing how longitudinally displaced pixel images overlay in the invention to form interpolated pixels;
Figure 12 is a schematic isometric illustration depicting a color matching filter for installation on the print head;
Figure 13 depicts typical spectral characteristics of red, green and blue LED light sources;
Figure 14 depicts a typical range of spectral characteristics of a group of LED light sources; and
Figure 15 shows the spectral transmission characteristics of the color matching filter shown in Figure 12.

### DETAILED DESCRIPTION

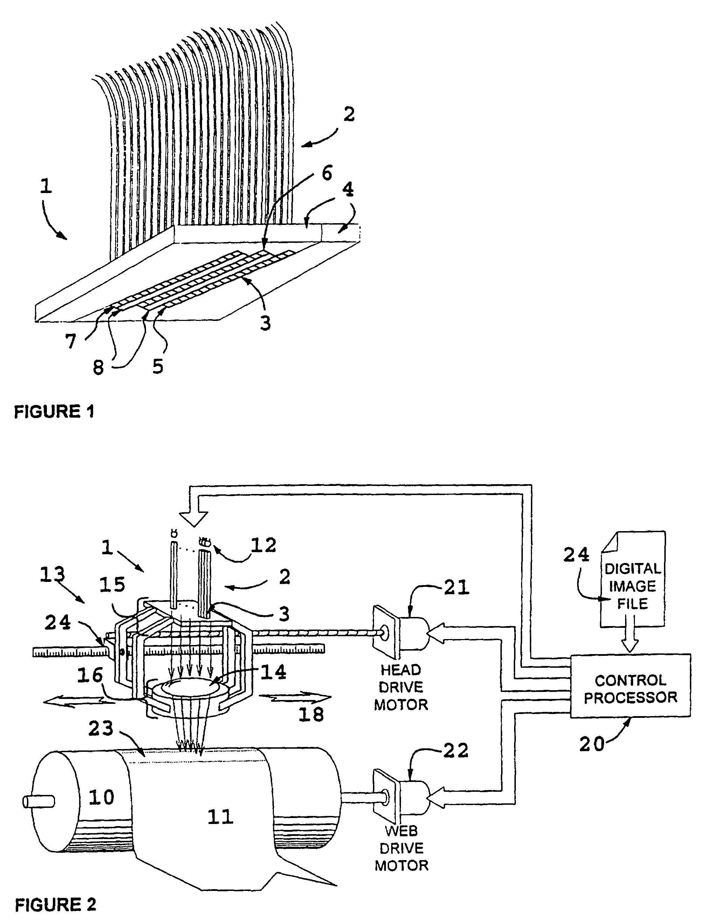

Figure 1 shows an imaging (or print) head 1 useful in a printer (FlG.2) suitable for embodying apparatus in accordance with the present invention. The head 1 is comprised of a plurality of light sources, e.g., fiber optic tubes 2 preferably having uniform square cross section ends 3, enabling them to be readily clamped or bonded in frame 4 in precise alignment arranged in columns 5,6,7. The columns may be arranged in contact, or spaced apart with precision spacers 8 with each column preferably containing the same number of tube ends 3. Although the assembly as shown in Figure 1 has a planar surface, other surface shapes are possible. For example, curved surfaces have the advantage of being able to contour to the surface of a drum 10 (Figure 2) around which photosensitive material 11 is passed, or to correct for focus aberrations common to lenses. The input ends of the fiber optic tubes 2 are coupled to independently excitable light sources, preferably light emitting diodes (LEDs) in LED bank 12. The multiple LEDs are selected to be matched as closely as feasible. The fiber optic tubes 2 deliver light from the light sources to expose the photosensitive material 11 with each tube end forming a latent pixel image on the material 11. An alternative embodiment of the invention could eliminate the fiber optic tubes and instead mount multiple LEDs directly into frame 4.

Figure 2 shows the head 1 in place in one possible application of the invention. In this application, the image of the output ends of the fiber optic tubes 3 is projected via a lens 14 onto a target surface, i.e., a web or sheet of photosensitive material 23, which is tensioned around a drum 10. The print head assembly 15 and lens assembly 16 are mounted for linear lateral movement in a scan direction 18 parallel to the axis of the drum 10 around which the photosensitive material 23 is positioned. As the print head scans, encoder 24 indicates the columnar position of the print head along the scan line. The photosensitive material 23 is moved longitudinally perpendicular to the scan direction 18.

The printer 13 is controlled by a control processor 20, e.g., a computer or microprocessor, which activates a head drive motor 21 and a web drive motor 22. The head drive motor 21 linearly scans the print head 1 and lens assembly 16 across the width of the web to expose a web strip 23. As the print head scans, encoder 24 generates an output signal which indicates to the processor 20, the columnar position of the print head along the scan line. The web drive motor 22 rotates the drum 10 to move the web 11 longitudinally past the print head. Typically, the web is stepped a distance approximately equal to the longitudinal dimension of the strip 23 after each print head scan.

The control processor 20 also controls the multiple light sources in LED bank 12 in response to a digital image file 24 accessed by the processor. The image file 24 digitally describes the image to be exposed onto the photosensitive material 11 by the exposing head 1.

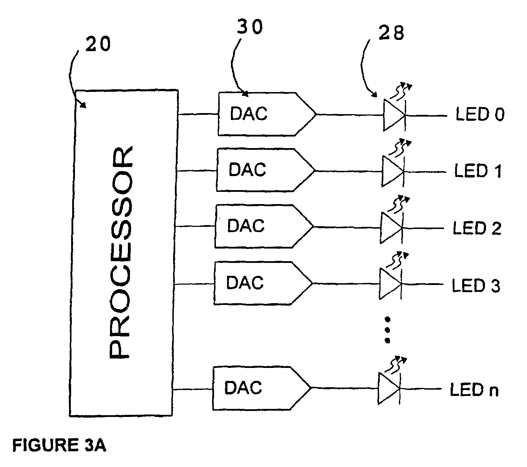

Figure 3A schematically depicts processor 20 controlling the multiple light sources 28 (represented by LEDₒ - LEDₙ) in head 1 as the head scans. Selective energization of the light sources 28 by the processor 20 exposes the photosensitive material 11 to form a latent image on the material. Each light source 28 is controlled by a digital to analog converter (DAC) 30 which produces an analog drive signal in response to a digital drive signal supplied thereto by the processor 20. Although it is preferred that all of the physical light sources 28 exhibit precisely the same exposing efficacy, i.e., light output intensity vs. analog drive signal, as a practical matter, it is extremely difficult, if not impossible, to precisely match the multiple light sources. In accordance with one aspect of the present invention, as will be described hereinafter, the relative exposing efficacy of each light source is first determined and then the processor 20 provides intensity correction values to the DACs to normalize the intensity of the multiple light sources.

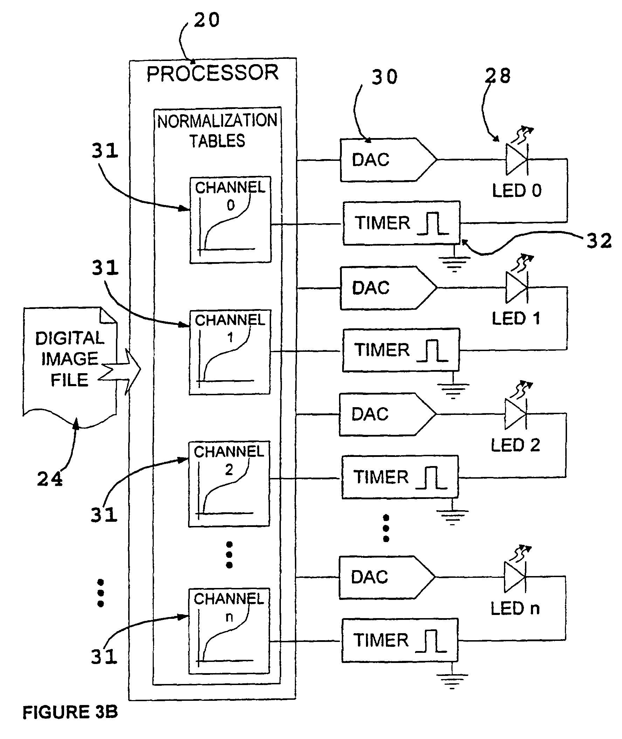

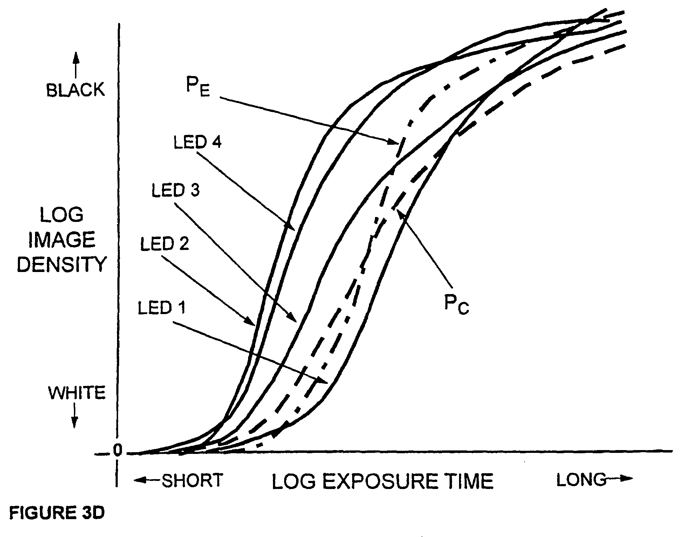

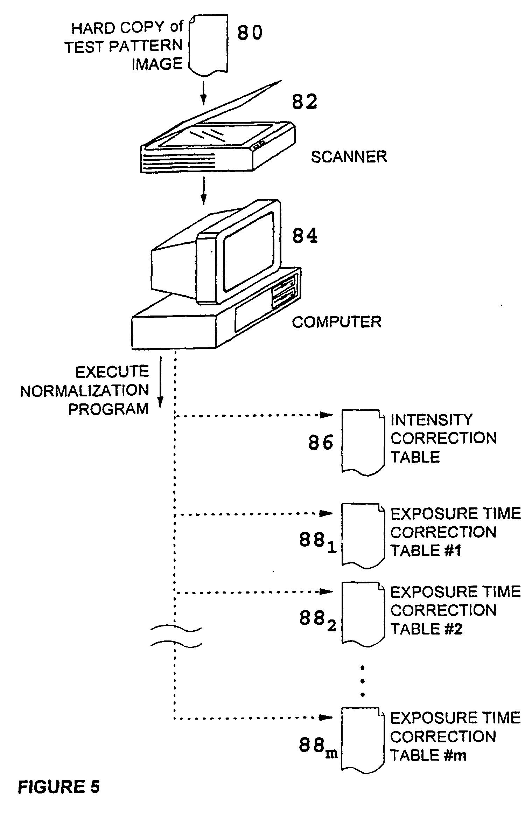

Figure 3D depicts exemplary Image Density vs. Exposure Time performance curves for a population of typical uncorrected light sources (e.g. LEDs) used to expose photosensitive material. In order to produce continuous tone images without visible artifacts, each light source performance curve preferably conforms to a common curve, e.g. Pc. Using DACs as shown in Fig 3A allows the separate performance curves of the multiple light sources to be matched at one point on each curve. In accordance with the present invention, in order to normalize the curves of all light sources, a separate normalization lookup table is created for each light source. Each normalization lookup table contains the exposure times to achieve each exposure density for the given light source. Accordingly, as shown in Figure 3B, a different timer circuit 32 is operatively coupled to each light source 28 and DAC 30. Each timer circuit 32 receives exposure times from the processor 20, as derived from the look up table 88 (figure 5), each time the light source is energized.

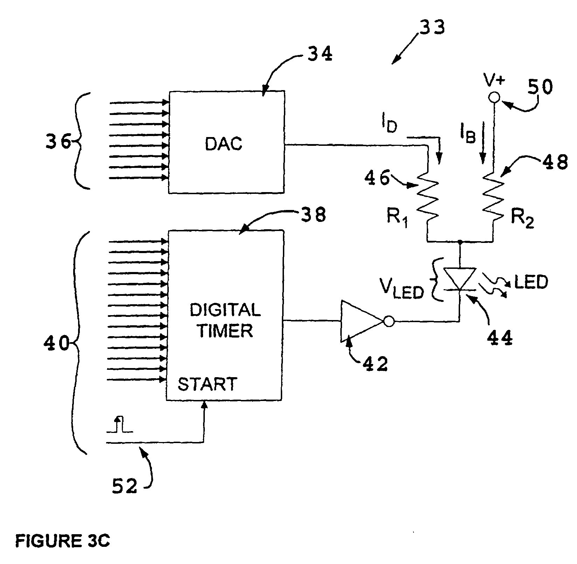

Figure 3C shows a preferred control circuit 33 for driving a single light source 44, e.g. LEDₓ. Circuit 33 includes DAC 34 which generates an output voltage, Vout, according to a digital intensity correction input 36 presented to the DAC by processor 20. The output voltage from DAC 34 generates a current ID through resistor 46 according to the formula (Vₒᵤₜ - V_{led})/R1. In addition to the current ID, a bias current IB may be applied to the LED 44 from resistor 48 according to the formula (V+ - V_{led})/R2. The bias current serves to increase the brightness of the LED 44 and to simultaneously increase the resolution of the DAC 34. Increasing the resolution of the DAC 34 allows a higher precision of normalization of the LEDs 44.

Still referring to Figure 3C, the inverter 42 sinks the drive current, ID + IB from the LED 44 and serves as the switch for turning the LED on and off. The LED 44 is turned on when the output of the inverter 42 is low, which corresponds to the output of the programmable timer 38 being high. The output of the programmable timer 38 is high for an on-duration initiated by the start pulse applied to input 52 by processor 20. The output of the programmable timer 38 stays high for a period of time corresponding to a digital exposure time correction input 40 supplied by processor 20. In an exemplary embodiment of the invention, the programmable timer 38 has a resolution of 14 bits, corresponding to 16,385 separate programmable time durations. During the on-duration when the LED 44 is illuminated, its intensity is determined by the currents ID and IB respectively supplied through resistors 46 and 48. The magnitude of the current ID is attributable to the digital input 36 supplied by processor 20 which in the exemplary embodiment, has a resolution of 8 bits.

Thus, it should now be understood that for each light source, and for each energization of each light source (i.e., a single pixel exposure), the processor 20 provides the intensity correction input to its DAC 34 and the exposure time correction input to its timer 38. In accordance with the preferred embodiment, these digital inputs are generated by a table look-up procedure executed by the processor. That is, for each light source, the processor 20 stores (1) an intensity correction number (e.g. 8 bits) and (2) a plurality of exposure time correction numbers (e.g., each of 14 bits). The particular exposure time number selected by the processor 20 depends upon the image density desired for the pixel being exposed.

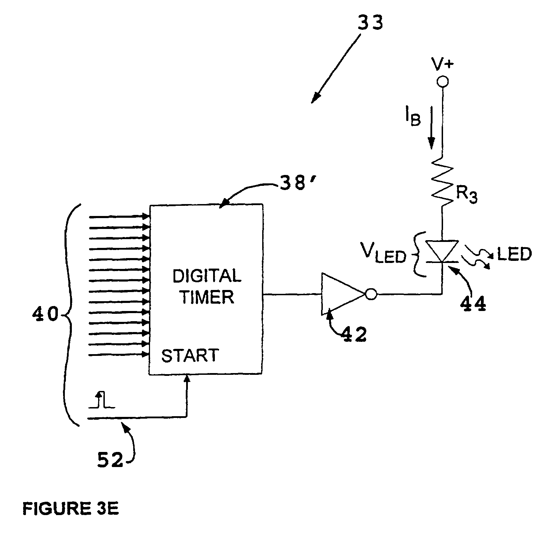

For an alternative which is not an embodiment of the invention (Figure 3E), the DACs 34 can be omitted. A trimming resistor R3 can be installed at the time of manufacture to achieve coarse normalization between multiple LEDs 44. Precision normalization is accomplished by exposure time values supplied to timer 38 from processor 20.

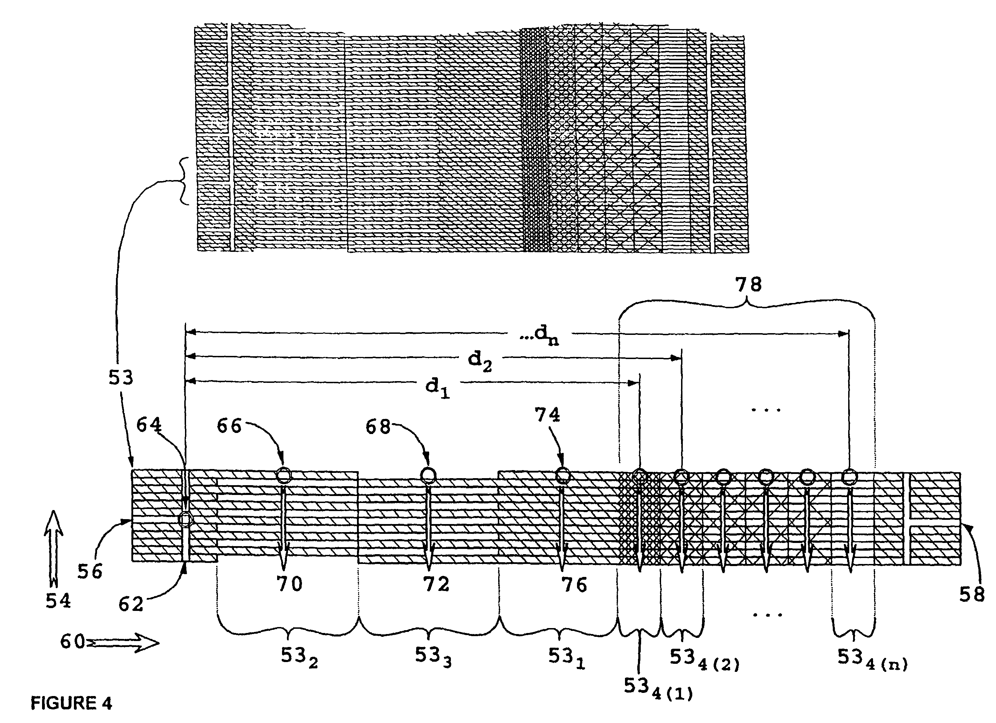

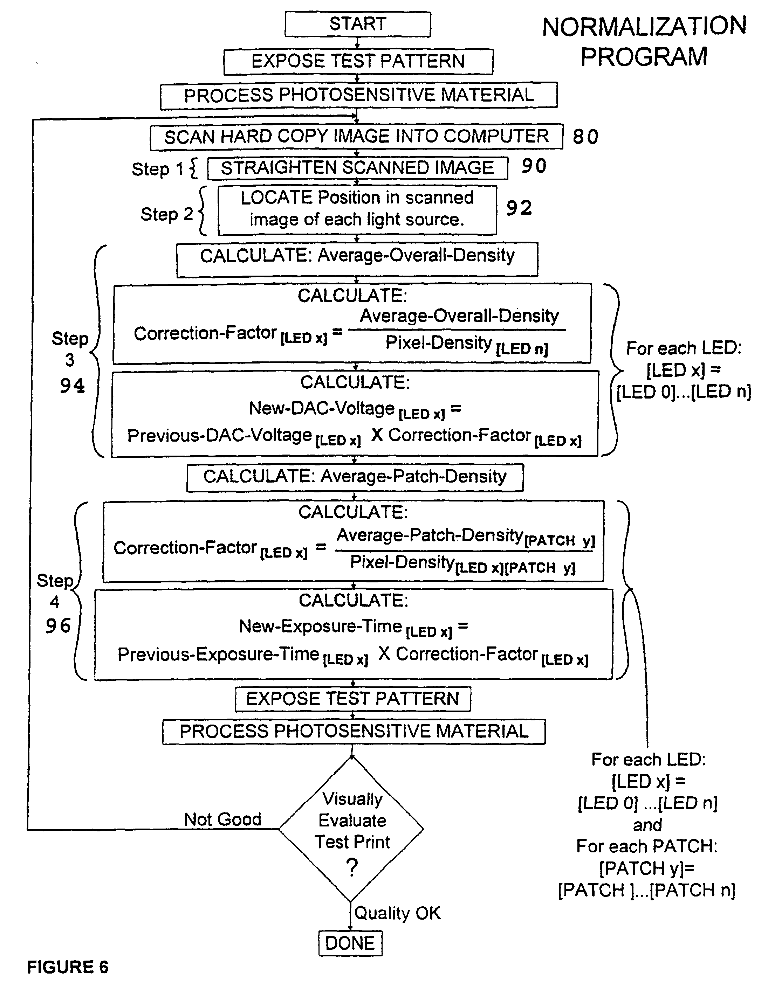

In order to initially generate the aforementioned intensity correction and exposure time correction tables, a calibration procedure is performed in which the head exposes a test image pattern (Figure 4) onto a photosensitive material sheet. The sheet is then processed to produce a hard copy test pattern image. The hard copy is then scanned into a computer (Figure 5) which executes a normalization program (Figure 6) to produce the intensity correction and exposure time values required to form the look up tables. In an alternative embodiment, the normalization program could be used to develop a suitable formula for generating the correction values as needed rather than storing look up tables.

Attention is now directed to Figure 4 which depicts a preferred test image pattern 53 suitable for being analyzed by the aforementioned calibration procedure to determine the exposure efficacy of each of the multiple light sources. The test image 53 is formed by the print head scanning across the photosensitive material to expose a strip 23 (Figure 2). The test image 53 can be considered as comprised of a rectangular matrix of pixel locations. Each row (raster line) of the matrix is exposed by a different one of the multiple print head LEDs. As the head scans, each LED is controlled by the processor 20 to collectively produce the test image 53. Briefly, the test image 53 is comprised of the following areas from left to right:

| | |
|---|---|
| 53₁ | a uniform density region formed by all LEDs |
| 53₂ | a striped region formed by even numbered LEDs |
| 53₃ | a striped region formed by odd numbered LEDs |
| 53_{4(I)} - 53_{4(X)} | multiple regions, each of uniform density formed by all LEDs, but with the multiple regions being of different densities. |

With reference to Figure 5, after the hard copy test image 80 is produced, it is scanned by scanner 82 to produce a digital file representing the density of each scanned pixel. The scan resolution should equal or exceed the print resolution. The test image file is then processed by computer 84 which executes a normalization program to analyze the image and ultimately produce the intensity correction table 86 and/or multiple exposure time correction tables 88_{I} - 88_{M}.

During the analysis, the output voltages from the DACs are adjusted in order to adjust the intensities of the LEDs 94 and hence normalize the outputs of the light sources at a single intensity level to produce table 86. Based on further analysis of the test image, separate normalization lookup tables 88 of exposure times are created for each LED in order to normalize the exposing efficacy of each light source at each of a series of different image densities.

As previously mentioned, the tables 86, 88 are used during the exposing of an image when the pixels to be printed are specified in a digital image file 24. The data in the image file specifies the density of each of the pixels to be printed. As each pixel is to be exposed, the processor 20 looks up the necessary exposure time for each LED in the appropriate table and presents the digital number representative thereof to the appropriate LED timer 38 (Figures 3C & 3E).

Attention is now directed to Figure 6 which describes the normalization program executed by computer 84. After the hard copy is scanned 82, the first step 90 in the analysis is to rotate the image so that it is straight with respect to the light sources which exposed it. This is necessary in order to assure that each raster line in the image was exposed by only one of the light sources. When this condition is met, each raster line can be associated with the light source which exposed it, and the efficacy of that light source can be determined by assessing the density of the pixels along that raster line. In order to straighten the image, horizontal reference lines are located in the image file. The lines are identified by analyzing the pixel values in the image file using common and well known image processing techniques. The lines are located by parsing the image as follows:

Starting in the lower left corner of the image 53 (Figure 4), the image is parsed in a northerly direction 54 until the first horizontal reference line 56 is located.

Next, starting at the lower right corner of the test image, the image is parsed in a northerly direction 54 until the second horizontal reference line 58 is located. Based upon the difference in vertical position of the first and second horizontal reference lines, the test image is rotated to such an extent that both horizontal reference lines fall on the same raster line within the image file. In the test image, both horizontal reference lines were produced by the same individual light source. Consequently the rotation process results in an image which is perfectly straight with regards to the scan direction of the light sources. At this stage, all the points created by a particular light source fall on a particular horizontal row or raster line of the image file. Further analysis proceeds with the newly straightened version of the image.

The second step 92 in the analysis of the image is to locate, for each light source, the raster line within the image file which was exposed by that light source. On the test image, a section of horizontal lines, exposed by predetermined light sources is printed. Each light source exposes one horizontal line. By parsing the image, perpendicular to the horizontal lines, the individual horizontal raster lines are identified within the image file which correspond to each of the individual light sources. The horizontal lines are parsed as follows: Starting with the first horizontal reference line 56 (Figure 4), the image is parsed in an easterly direction 60 until the vertical reference line 62 is located. Next, a point 66 is located which is predetermined distance north and east of the intersection 64 reference lines. Starting at that point 66, the image is parsed in a southerly direction 70 across a series of lines produced by the even numbered light sources. For each of the even numbered light sources, the horizontal raster line within the image file produced by the corresponding light source is identified. Next, a second point 68 is located at a second predetermined distance from the first intersection of the reference lines. Starting at that point 68 the image is parsed in a southerly direction 72 across a series of lines produced by the odd numbered light sources. For each of the odd numbered light sources, the horizontal raster line within the image file produced by the corresponding light source is identified. With this process is completed, each light source on the printer is correlated to a horizontal raster line within the image file.

With the raster lines within the image file correlated to the individual light sources which exposed them, the data from said raster lines within the image may be analyzed in order to determine, and normalize, the intensity of the individual light sources. The third step 94 in the analysis is to calculate the individual normalization factors for each of the multiple light sources' DACs. For each light source, the image data produced by that light source may be analyzed. The exposure density of the image, is analyzed in the area proximate to the light source which exposed it. The intensity of each light source is normalized by means of adjusting it's individual DAC. In order to gather the data necessary to normalize the light sources, the image is parsed as follows: A point 74 is located which is a predetermined distance north and east of the intersection 64 of the reference lines. Starting at that point 74, the image is parsed in a southerly direction across an evenly exposed gray section of image. On each raster line corresponding to a particular light source, the image density is measured. The ratio between the image density on that horizontal raster line and the average of the densities at all of the horizontal raster lines within this section of the image is calculated for use as the normalization factor. Said normalization factor is then applied to the binary number being supplied to the DAC associated with that same light source. The process of measuring the density, calculating the difference from the average density, and applying a correction factor to the DAC, is repeated for each light source in the printer. Upon completion of this step, the intensities of the light sources have been normalized. Note that in the alternative embodiment of the invention depicted in figure 3E, the DACs have been eliminated and normalization is carried out using step 4 below.

The fourth step 96 in the analysis is to calculate the individual normalization factors for each of the multiple light sources, at each of the printed densities 53.4 on the test image. For each light source, in each density region, the image data produced by that light source is analyzed. The exposure density of the image, is analyzed in the area proximate to the light source which exposed it. An exposure correction factor is calculated which is equal to the exposure density produced by said light source divided by the average exposure density in that density area. In order to gather the data necessary to normalize the exposures, the image is parsed as follows: A series of points 78 (Figure 4) are located, the first of which is located a predetermined distance north and east of the intersection 64 of the reference lines, and which are equally spaced in an easterly direction 60. Starting at that point 78, the image is parsed in a southerly direction across an evenly exposed section of image of a particular density. On each raster line corresponding to a particular light source, the image density is measured. The ratio between the image density on that horizontal raster line and the desired density for that section of the image is calculated for use as the normalization factor. This normalization factor is applied to the normalization lookup table for the particular light source. The normalization factor is applied to the entry in normalization lookup table which corresponds to the desired density to be produced. The process of measuring density, calculating the difference from the desired density, and applying a correction factor to the exposure correction lookup tables, is repeated for each light source in the printer, and for each density section in the test image. In the exemplary test image used by the inventors, normalization is conducted at 17 different densities. It is understood that a normal continuous tone image contains many more than 17 densities. Thus, a test image containing a greater number of different density regions could be used and/or exposure times for intermediate densities can be determined by interpolation. That is, following the steps of normalizing the light sources at 17 densities, exposure times for all remaining possible intermediate densities are calculated from the 17 normalized exposure times, using well known mathematical interpolation techniques. Upon completion of this step, the light sources have been normalized to each density between white and black.

It should be understood that the above series of steps must be applied separately to each of the primary printing colors, which are usually Cyan, Magenta and Yellow, but may also include other primary colors. It should also be understood that this process may be applied to each color by printing separate, individually colored, test images. It should also be understood that the color gray is composed of equal parts of the primary colors, and consequently this analysis may be performed for each separate color by analyzing the same, gray colored, image. The specific test image used by the inventors and depicted in Figure 4 is one possible design of such an image. The procedure should work equally well with other test images which allow the positions within the image to be correlated to the individual light source which exposed that portion of said image.

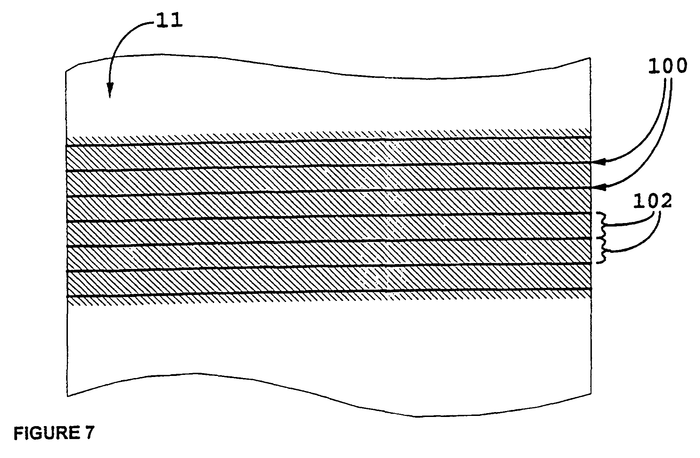

In one actual embodiment of digital printer constructed in accordance with the invention, the exposing head 1 scans back and forth across the photosensitive material, at a rate of approximately one scan per second. If all pf the light sources are normalized to the same curve Pc (Figure 3D), the portion of the photosensitive material which is exposed by the overlap of adjacent light sources within a single scan, exposes differently than does the portion of the photosensitive material which is exposed by the overlap of adjacent scans. The essential difference is that the area within the scan exposed by adjacent light sources is exposed effectively simultaneously, while the area exposed by the overlapping scans is exposed twice with approximately one second time delay between exposures. The effects of latent image degradation and reciprocity failure combine to create a different exposure along the line where two adjacent scans of the head meet. This difference in exposure can cause the appearance of a visible line in the final image. Figure 7 depicts a large area of uniform exposure created by several scans of light sources normalized to the same curve Pc (Figure 3D). While the print density within a single scan 102, and from scan to scan, is consistent, the image density where adjacent scans meet 100, is different. In order to correct for these effects, the light sources at the edges of a scan must be normalized to different curves than the light sources within the scan.

Figure 3D depicts the optimal Image Density vs. Exposure Time performance curve Pc. If all LEDs are normalized to match this curve, the image depicted in Figure 7 results. In order to normalize the edges of the scan 100 to the same print density as the area within the scan 102, the light sources at the edge of the scan must be normalized to a different curve Pe (Figure 3D). The normalizing of the edge light sources to curve Pe, is accomplished during the normalization process described above. During the analysis of the test image (Figure 4), as described above, the print density differences at the edges of the scans are present in the test image. The normalization process as described above will cause the light sources at the edges of the scan to be normalized such that the print density at the edges of the scan matches the print density within the scan. The result of this normalization will be that the light sources at the edge of the scan match curve Pe, and the light sources within the scan match curve Pc.

Attention is now directed back to Figure 1. The ends of the fiber optic tubes are preferably of a substantially square or rectangular cross section and are arranged in columns 5,6,7. The fiber optic tubes are selected or manufactured to be of precise cross sectional dimension. With the aid of an assembly fixture, the fiber optic tubes are clamped by frame 4 or bonded in place. Each column is comprised of multiple fiber optic tube output ends which are assembled and positioned in precise alignment with one another. The columns may be arranged in contact, or spaced apart with precision spacers 8. In either configuration, each column contains the same number of fiber optic tubes and is precisely the same length. After assembly, the fiber optic tube ends are machined to a predetermined cross section and polished. The input ends of the fiber optic tubes are connected (not shown) to independently excitable light sources, preferably light emitting diodes (LEDs).

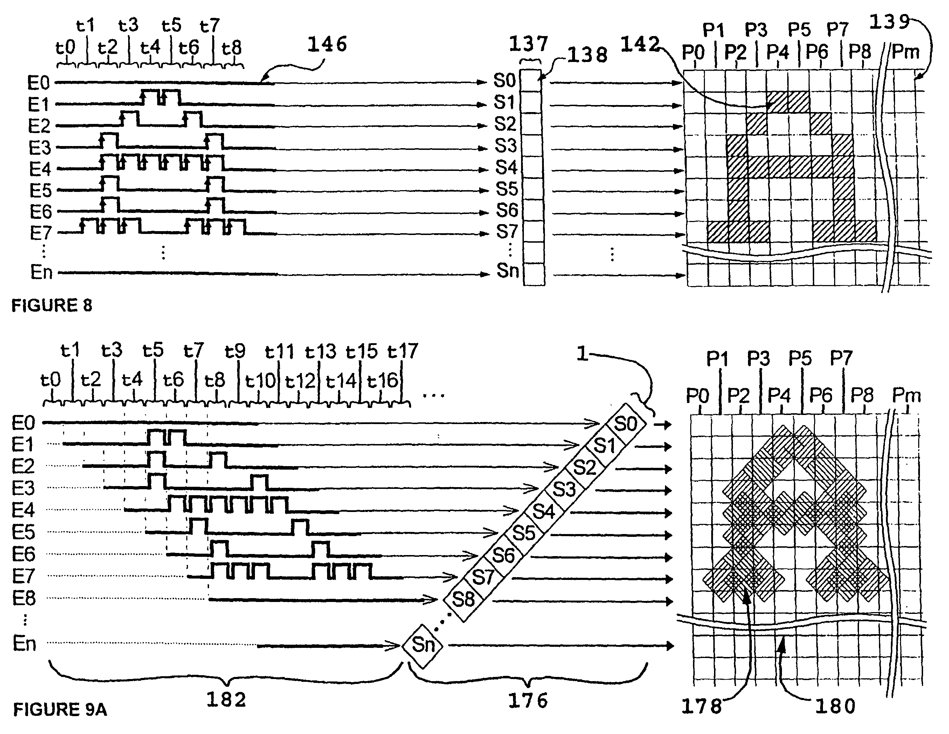

Figure 8 shows a representation of a print head 137 which has been described in the prior art. Light sources 138, identified as S₀ through Sₙ, are of square cross section, and expose pixel images represented in the grid 139. As the print head scans across a row of the photosensitive material (defining an image field comprised of m columns and n rows), a pixel image can be exposed at each columnar position P₀ through Pₘ. The exposures of the pixel images are enabled by n separate enabling signals 146 E₀ through Eₙ. The enabling signals are synchronized with the encoder 24 indicated in Figure 2.

Figure 9A shows a representation of a preferred head 1 in accordance with the invention. The print head is inclined at an angle of 45 degrees to the scan direction. Light sources 176 S₀ through Sₙ, define a diamond shaped cross section as a result of the square ends being inclined at 45 degrees relative to the scan direction 18. Light sources 176 S₀ through Sₙ, expose pixel images 178 as represented in the grid 180. As the print head 1 scans across the photosensitive material, the pixel images can be exposed at each position P₀ through Pₘ. As a consequence of being inclined at 45 degrees, the pixel images associated with a single columnar position P are not exposed simultaneously. Instead, pixel Pₘ,S₀ is exposed at the same time as pixels Pₘ₋₁,S₁ and Pₘ₋₂,S₂, etc. The exposures of the pixel images are enabled by n separate enabling signals 182 E₀ through Eₙ. The enabling signals are synchronized with the encoder 24 indicated in Figure 2. As the head scans, the pixel images in accordance with the invention overlap. That is, the pixel images of each scan row overlap with the pixel images of rows above and below by substantially 50% of the center to center distance between pixel images. Also, each pixel image along a row overlaps with pixel images horizontally displaced before and after by substantially 50% of the center to center distance between pixel images.

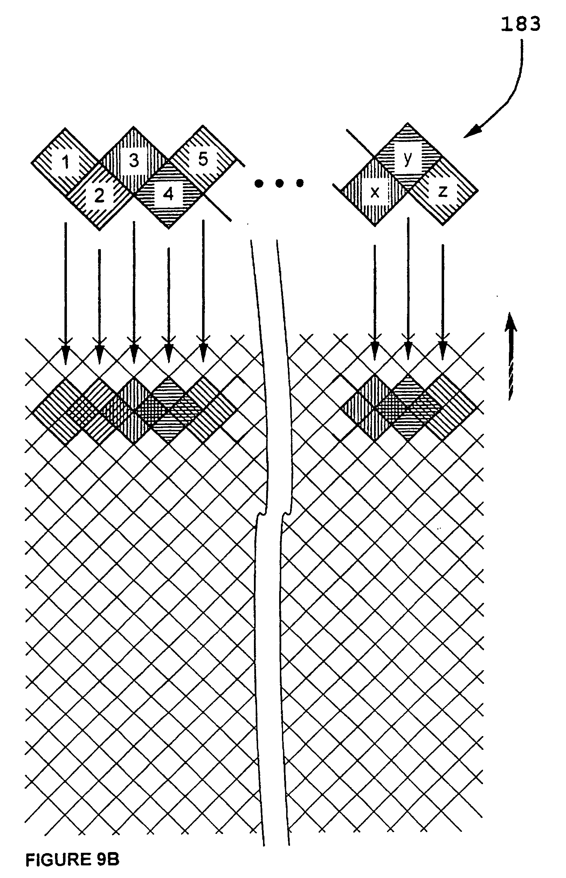

Whereas the head in Figure 9A scans laterally perpendicular to the longitudinal direction of the photosensitive material 23, Figure 9B depicts an alternative head configuration 183 in which the head can be fixed. More particularly, Figure 9B depicts a head 183 extending across the width of the photosensitive material 23. The head 183 is comprised of at least two rows of square pixel image generators (e.g., fiber optic tube ends) oriented at a 45 degree angle with respect to the lateral and longitudinal directions. The head 183 is capable of imaging the same pixel image pattern as is depicted in Figure 9A.

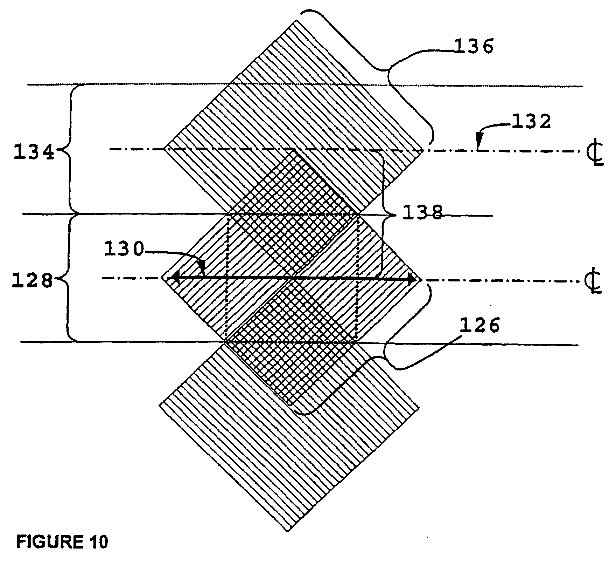

Referring to Figure 10, as the photosensitive material is exposed by the pixel images, the exposure contribution from pixel image 126 to its scan line 128 is greatest in the center portion because the pixel 126 is widest along that line, The exposure level decreases linearly with distance transverse to the center line 130 of the pixel. The exposure level decreases to the point where it is zero at the center line 132 of the adjacent scan line 134. Correspondingly, the exposure contribution from the adjacent pixel image 136 to the raster line 128 decreases with the distance from it's center line 132. It can be seen that at any point on a line between the center of the pixel image 126 and the center of the adjacent pixel image 136, the exposure level is comprised of a portion of each pixel image. Due to the shape of the pixel image, it can be seen that the exposure level in the region between the center line 130 of the pixel image 126 and center line 132 of the adjacent pixel image 136 is a linear average of pixel 126 and the adjacent pixel 136.

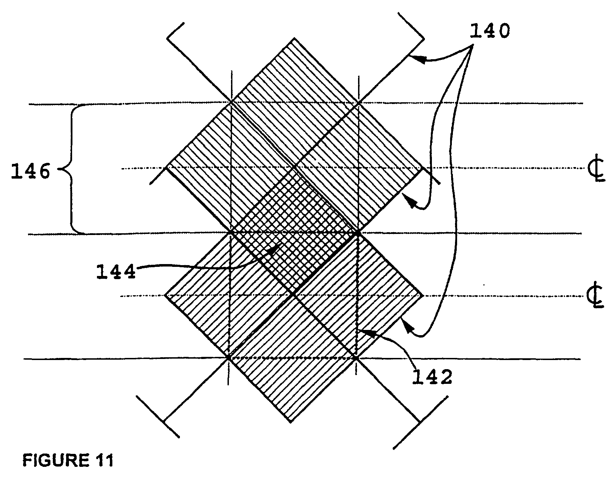

Figure 11 shows the pattern of diamond pixels 140 relative to a traditional square pixel pattern 142 as represented in Figure 8. It can be seen that the overlapping of the diamond pixels 140 generates diamond shaped interpolated pixels 144.

The interpolated pixels have an area equal to about 25% of the original pixels 140. The side dimension of the diamond shaped interpolated pixels 144 (which in a constructed exemplary embodiment is equal to .0047 inches) is .707 (=1/square root of 2) times the side dimension of the traditional square pixel 142. For a given data input, these smaller interpolated pixels 144 cause an increased visual resolution with a corresponding increase in apparent sharpness in the final image.

The interpolated pixels 144 create an effective blending because, in part:
1) The head is in motion as it exposes pixel images which causes the amount of light delivered to the photosensitive material to be greatest where the pixel is widest in the scan direction, and
2) The photosensitive material is generally not sufficiently resolute to resolve a sharp image of one diamond pixel. Consequently the material diffuses adjacent pixels into each other to some degree.

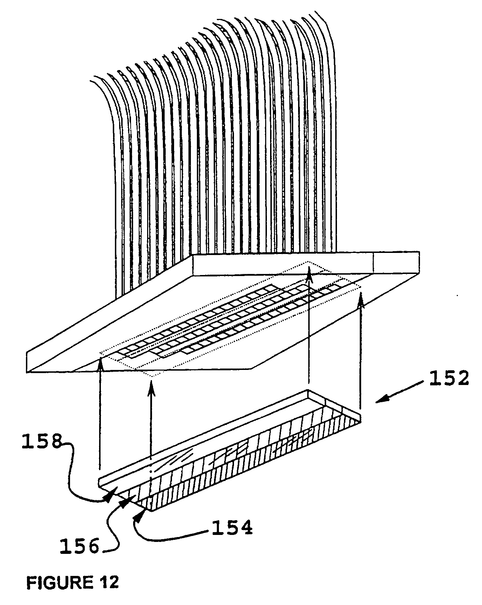

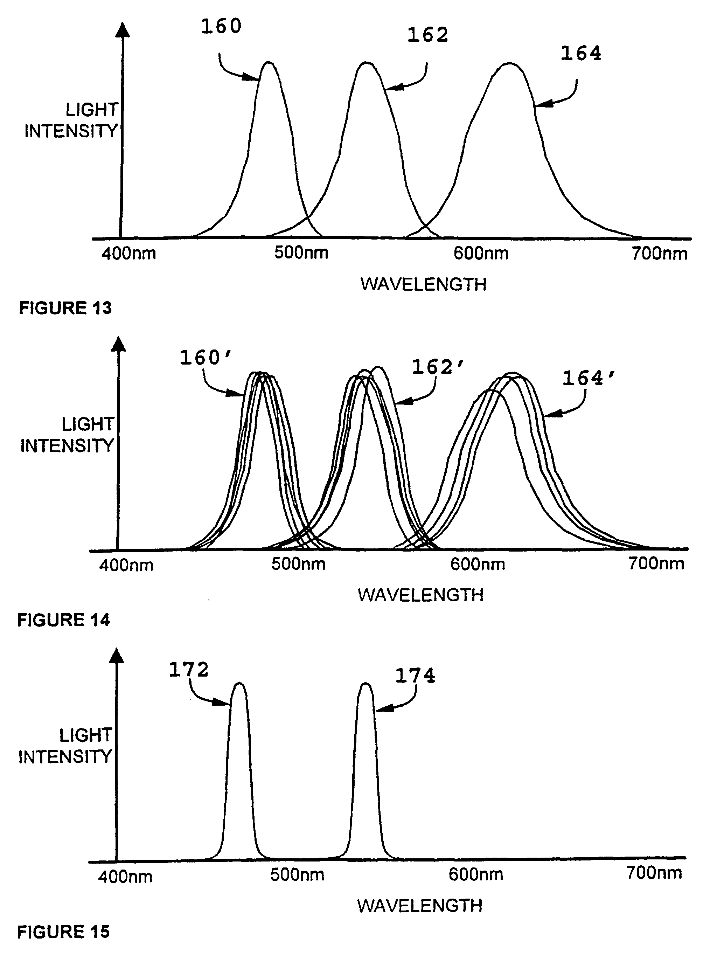

Figure 13 shows the spectral characteristics of typical red 164, green 162 and blue 160 LED light sources. Due to manufacturing variations common in LED technology there can be considerable variation in the spectral output from similar LEDs. Figure 14 shows a typical range of variation in spectral outputs in a small population of red, green and blue LED light sources, respectively 160', 162' and 164'. Figure 15 shows the narrow pass spectral transmission characteristics 172, 174 of blue and green filters depicted in Figure 12. By passing the energy of each of the LEDs in the population of curves shown in Figure 14, through a filter whose spectral response is shown in Figure 15, the spectral output of each of the LEDs is constrained to fall within the envelope of the filter. After filtering, all light sources will have substantially the same spectral characteristics and function substantially the same when exposing the different colors of the photosensitive material.

Figure 12 shows a preferred color matching filter 152 installed on the print head 1. The color filter 152 is comprised of three sections: blue 154, green 156 and red or clear 158. The blue section 154 of the color filter has the narrow pass spectral transmission characteristic 172 shown in Figure 15. The green section 156 of the color filter has the narrow pass spectral transmission characteristic 174 as shown in Figure 15. The filter 152 is positioned over the output ends of the fiber optic tubes so that the light supplied by blue light sources, passes through the blue portion 154 of the filter 152. Similarly, the light supplied by green light sources passes through the green portion 156 of the filter 152. Light supplied by red light sources passes through the red (or clear) portion 158 of the filter 152. In one implemented embodiment of the invention, the light supplied by the red light sources, can pass through a substantially clear section of glass 158, i.e., the substrate for the blue 154 and green 156 filters because some photosensitive materials have a very high tolerance to spectral variations in the red band.

The foregoing describes applicant's preferred methods and apparatus for producing high quality continuous tone and/or color images on photosensitive material. It is recognized that numerous modifications and/or variations will occur to those skilled in the art without departing from the spirit or scope of the invention.

## Claims

1. Apparatus responsive to a digital image file, the digital image file comprising data defining a variable density for each of multiple pixels, for producing a composite image on a photosensitive material, said apparatus comprising:
a head (1) comprised of a plurality of light sources (28) each individually energizable by a drive signal supplied thereto to variably expose said photosensitive material to produce a defined pixel image density thereon;
means (33) for selectively supplying respective drive signals to said light sources;
a first source (86) storing a plurality of correction values respectively associated with said plurality of light sources for normalizing the outputs of the light sources at a single light intensity level;
a second source (88) storing multiple correction values for each light source for normalizing the exposing efficacy of each light source at multiple pixel image densities; and
a control processor (20) for controlling the amplitude and duration of each drive signal supplied to a light source as a function of digital image file data defining a pixel image density and correction values derived from both said first and second sources

2. The apparatus of claim 1 wherein said means for supplying drive signals includes a drive module responsive to digital drive signals applied thereto for supplying analog drive signals to said light sources; and wherein
said control processor applies digital drive signals to said drive module.

3. The apparatus of claim 2 wherein said drive module includes digital to analog converter means.

4. The apparatus of claim 1 wherein said means for supplying drive signals includes a timer module responsive to digital exposure time values applied thereto; and wherein
said control processor applies digital exposure time values to said timer module.

5. The apparatus of Claim 1 wherein each source of correction values includes a look up table storing digital data.

6. The apparatus of claim 1 wherein said correction values normalize the outputs of said light sources to a common performance curve.

7. The apparatus of claim 1 wherein said correction values normalize the outputs of a first group of said light sources to a first performance curve and a second group of said light sources to a second performance curve.

8. The apparatus of claim 1 wherein said plurality of light sources are arranged in order including intermediate light sources and edge light sources; and wherein said correction values normalize the outputs of said intermediate light sources to a first performance curve and the outputs of said edge light sources to a second performance curve.

9. A method of controlling an array of light sources each capable of producing a variable density pixel image on a target surface, said method including the steps of:
selectively energizing said light sources to form a first test pattern image on said target surface;
scanning said first test pattern image to determine the density of each pixel image in said first test pattern image;
calculating first correction factors to normalize the intensity of said light sources;
applying said first correction factors to said light sources to produce a second test pattern image;
scanning said second test pattern image to determine the density of each pixel image in said second test pattern image;
calculating second correction factors to normalize the pixel images in said second test pattern image; and
applying said second correction factors to said light sources.

10. The apparatus of Claim 1, wherein said composite image is comprised of multiple longitudinally displaced pixel rows wherein each row is comprised of laterally displaced pixel images and wherein each of said pixel image is square.

11. The apparatus of Claim 10, wherein each square pixel image is offset by substantially 45° with respect to said lateral and longitudinal directions.

12. The apparatus of Claim 11, wherein
(1) adjacent pixel images in each row partially overlap and/or
(2) pixel images in adjacent rows partially overlap.

## Patentansprüche

1. Auf eine digitale Bilddatei responsive Vorrichtung, wobei die digitale Bilddatei Daten umfasst, die eine variable Dichte für jedes einer Vielzahl von Pixel definiert, zur Erzeugung eines zusammengesetzten Bilds auf einem lichtempfindlichen Material, wobei die Vorrichtung Folgendes umfasst:
einen Kopf (1), bestehend aus einer Vielzahl von Lichtquellen (28), die einzeln durch ein ihnen zugeführtes Steuersignal mit Energie beaufschlagbar sind, um das lichtempfindliche Material zur Erzeugung einer definierten Pixelbilddichte auf diesem variabel zu belichten;
ein Mittel (33) zur selektiven Speisung der Lichtquellen mit entsprechenden Steuersignalen;
eine erste Quelle (86), die eine Vielzahl von Korrekturwerten speichert, welche jeweils der Vielzahl der Lichtquellen zugeordnet sind, um die Ausgangssignale der Lichtquellen auf einen einzigen Lichtintensitätspegel zu normalisieren;
eine zweite Quelle (88), die mehrere Korrekturwerte für jede Lichtquelle speichert, um die Belichtungswirkung einer jeden Lichtquelle für mehrere Pixelbilddichten zu normalisieren; und
einen Steuerprozessor (20) zum Steuern der Amplitude und der Dauer eines jeden an eine Lichtquelle zugeführten Steuersignals als Funktion der digitalen Bilddateidaten, die eine Pixelbilddichte definieren, und der von der ersten und der zweiten Quelle abgeleiteten Korrekturwerte.

2. Vorrichtung nach Anspruch 1, worin das Mittel zur Speisung mit entsprechenden Steuersignalen ein Ansteuerungsmodul umfasst, das auf die daran angelegten digitalen Steuersignale responsiv ist, um die Lichtquellen mit analogen Steuersignalen zu speisen; und worin der Steuerprozessor digitale Steuersignale an das Ansteuerungsmodul anlegt.

3. Vorrichtung nach Anspruch 2, worin das Ansteuerungsmodul ein Digital-Analog-Wandlermittel umfasst.

4. Vorrichtung nach Anspruch 1, worin das Mittel zur Speisung mit entsprechenden Steuersignalen ein Taktmodul umfasst, das responsiv auf die daran angelegten digitalen Belichtungszeitwerte ist; und worin
der Steuerprozessor digitale Belichtungszeitwerte an das Taktmodul anlegt.

5. Vorrichtung nach Anspruch 1, worin jede Korrekturwertquelle eine Verweistabelle, die digitale Daten speichert, umfasst.

6. Vorrichtung nach Anspruch 1, worin die Korrekturwerte die Ausgangssignale der Lichtquellen auf eine gemeinsame Leistungskennlinie normalisieren.

7. Vorrichtung nach Anspruch 1, worin die Korrekturwerte die Ausgangssignale einer ersten Gruppe der Lichtquellen auf eine erste Leistungskennlinie und einer zweiten Gruppe der Lichtquellen auf eine zweite Leistungskennlinie normalisieren.

8. Vorrichtung nach Anspruch 1, worin die Vielzahl der Lichtquellen angeordnet sind, um mittlere Lichtquellen und Randlichtquellen zu umfassen; und worin die Korrekturwerte die Ausgangssignale der mittleren Lichtquellen auf eine erste Leistungskennlinie und die Ausgangssignale der Randlichtquellen auf eine zweite Leistungskennlinie normalisieren.

9. Verfahren zur Steuerung einer Anordnung von Lichtquellen, von denen jede zur Erzeugung einer variablen Pixelbilddichte auf einer Zieloberfläche imstande ist, wobei das Verfahren Folgende Schritte umfasst:
das selektive Beaufschlagen der Lichtquellen mit Energie, um ein erstes Testmusterbild auf der Zieloberfläche zu erzeugen;
das Abtasten des ersten Testmusterbilds zur Bestimmung der Dichte eines jeden Pixelbilds im ersten Testmusterbild;
das Berechnen von ersten Korrekturfaktoren zur Normalisierung der Intensität der Lichtquellen;
das Anwenden der ersten Korrekturfaktoren auf die Lichtquellen, um ein zweites Testmusterbild zu erzeugen;
das Abtasten des zweiten Testmusterbilds zur Bestimmung der Dichte eines jeden Pixelbilds im zweiten Testmusterbild;
das Berechnen von zweiten Korrekturfaktoren zur Normalisierung der Pixelbilder im zweiten Testmusterbild; und
das Anwenden der zweiten Korrekturfaktoren auf die Lichtquellen.

10. Vorrichtung nach Anspruch 1, worin das zusammengesetzte Bild aus einer Vielzahl von in Längsrichtung verschobenen Pixelreihen besteht und worin jede Pixelreihe aus seitlich verschobenen Pixelbildern besteht und worin jedes Pixelbild quadratisch ist.

11. Vorrichtung nach Anspruch 10, worin jedes quadratische Pixelbild in Bezug auf die seitliche Richtung und die Längsrichtung um im Wesentlichen 45° versetzt ist.

12. Vorrichtung nach Anspruch 11, worin
(1) benachbarte Pixelbilder in jeder Reihe einander teilweise überlappen und/oder
(2) Pixelbilder in benachbarten Reihen einander teilweise überlappen.

## Revendications

1. Appareil sensible à un fichier d'images numériques, le fichier d'images numériques comprenant des données définissant une densité variable pour chacun de multiples pixels, afin de produire une image composite sur un matériau photosensible, ledit appareil comprenant:
une tête (1) composée d'une pluralité de sources de lumière (28), chacune individuellement excitable par un signal de commande fourni à celui-ci pour exposer de manière variable ledit matériau photosensible afin de produire sur lui une densité d'image de pixels définie;
des moyens (33) pour fournir sélectivement des signaux de commande respectifs auxdites sources de lumière;
une première source (86) stockant une pluralité de valeurs de correction respectivement associées à ladite pluralité de sources de lumière pour normaliser les sorties des sources de lumière à un niveau d'intensité de lumière unique;
une seconde source (88) stockant de multiples valeurs de correction pour chaque source de lumière afin de normaliser l'efficacité d'exposition de chaque source de lumière à des densités d'images de pixels multiples; et
un processeur de régulation (20) pour réguler l'amplitude et la durée de chaque signal de commande fourni à une source de lumière en fonction de données du fichier d'images numériques en définissant une densité d'image de pixels et des valeurs de correction dérivées à la fois desdites première et seconde sources.

2. L'appareil de revendication 1 dans lequel lesdits moyens pour fournir des signaux de commande comprennent un module de commande sensible à des signaux de commande numérique appliqués à celui-ci pour fournir des signaux de commande analogiques auxdites sources de lumière, et dans lequel
ledit processeur de régulation applique des signaux de commande numérique audit module de commande.

3. L'appareil de la revendication 2 dans lequel ledit module de commande comprend des moyens de conversion numérique en analogique.

4. L'appareil de la revendication 1 dans lequel lesdits moyens pour fournir des signaux de commande comprennent un module synchronisateur sensible à des valeurs de temps d'exposition numérique appliquées à celui-ci; et dans lequel
ledit processeur de régulation applique des valeurs de temps d'exposition numérique audit module synchronisateur.

5. L'appareil de la revendication 1 dans lequel chaque source de valeurs de correction comprend une table de consultation stockant des données numériques.

6. L'appareil de la revendication 1 dans lequel lesdites valeurs de correction normalisent les sorties desdites sources de lumière à une courbe de performance commune.

7. L'appareil de la revendication 1 dans lequel lesdites valeurs de correction normalisent les sorties d'un premier groupe desdites sources de lumière à une première courbe de performance et un second groupe desdites sources de lumière à une seconde courbe de performance.

8. L'appareil de la revendication 1 dans lequel les sources de ladite pluralité de sources de lumière sont disposées en ordre comprenant des sources de lumière intermédiaires et des sources de lumière de bord; et dans lequel lesdites valeurs de correction normalisent les sorties desdites sources de lumière intermédiaires à une première courbe de performance et les sorties desdites sources de lumière de bord à une seconde courbe de performance.

9. Un procédé de régulation d'un réseau de sources de lumière, chacune capable de produire une image de pixels de densité variable sur une surface recherchée, ledit procédé comprenant les étapes consistant à:
exciter de manière sélective lesdites sources de lumière pour former une première image de motifs d'essai sur ladite surface recherchée;
scanner ladite première image de motifs d'essai pour déterminer la densité de chaque image de pixels dans ladite première image de motifs d'essai;
calculer de premiers facteurs de correction pour normaliser l'intensité desdites sources de lumière;
appliquer lesdits premiers facteurs de correction auxdites sources de lumière pour produire une seconde image de motifs d'essai;
scanner ladite seconde image de motifs d'essai pour déterminer la densité de chaque image de pixels dans ladite seconde image de motifs d'essai;
calculer de seconds facteurs de correction pour normaliser les images de pixels dans ladite seconde image de motifs d'essai; et
appliquer lesdits seconds facteurs de correction à ladite source de lumière.

10. L'appareil de la revendication 1, dans lequel ladite image composite est composée de multiples rangées de pixels déplacés longitudinalement où chaque rangée est composée d'images de pixels déplacées latéralement et où chacune desdites images de pixels est carrée.

11. L'appareil de la revendication 10, dans lequel chaque image de pixels carrée est décalée de sensiblement 45° par rapport auxdites directions latérale et longitudinale.

12. L'appareil de la revendication 11, dans lequel
(1) les images de pixels adjacents de chaque rangée se chevauchent partiellement et/ou
(2) les images de pixels de rangées adjacentes se chevauchent partiellement.
